Europäisches Patentamt

**European Patent Office**

Office européen des brevets

(19)

(11) Veröffentlichungsnummer: **0 069 332**

**B2**

(12) NEUE EUROPÄISCHE PATENTSCHRIFT

(45) Veröffentlichungstag der neuen Patentschrift: **12.12.90**

(51) Int. Cl.⁵: **C 11 D 3/395,** A 01 N 59/00

(21) Anmeldenummer: **82105809.6**

(22) Anmeldetag: **30.06.82**

(54) Feste, stark alkalische, aktivchlorhaltige Mittel.

(30) Priorität: **08.07.81 DE 3126884**

(43) Veröffentlichungstag der Anmeldung:
**12.01.83 Patentblatt 83/02**

(45) Bekanntmachung des Hinweises auf die
Patenterteilung:
**25.11.87 Patenblatt 87/48**

(45) Bekanntmachung des Hinweises auf die
Entscheidung über den Einspruch:
**12.12.90 Patentblatt 90/50**

(84) Benannte Vertragsstaaten:
**AT BE CH DE FR GB IT LI LU NL SE**

(56) Entgegenhaltungen:
**LU-A- 40 898
US-A-3 352 785
US-A-4 242 216**

**Solvay Natronchemie B.V.: "Solvay Caustic
Soda Parels"**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Schnürch, Roland
Paul-Löbe-Strasse 39
D-4000 Düsseldorf 13 (DE)**
Erfinder: **Engels, Henrich
Mittelstrasse 20-22
D-4010 Hilden (DE)**
Erfinder: **Novotny, Rudolf, Dr.
Am Rittersberg 14
D-4000 Düsseldorf (DE)**

EP 0 069 332 B2

Courier Press, Leamington Spa, England.

## Beschreibung

Gegenstand der Erfindung sind feste Mittel, die Natriumhydroxid sowie aktivchlorhaltige Mittel in Form von Dichlorisocyanurat enthalten und lagerstabil sind.

Es ist bekannt, feste, aktivchlorhaltige Mittel herzustellen, die Ätzalkalien, wie NaOH, sowie aktivchlorhaltige Verbindungen in Form von Dichlorisocyanurat enthalten. Derartige Mittel werden für die Reinigung, zur Desinfektion sowie auch für die Lackkoagulation verwendet.

Sie können gegebenenfalls weitere Zusätze, wie Alkalimetallsilikate, Gerüstsubstanzen, Alkalimetallcarbonate und auch geringe Mengen nichtionische Tenside enthalten. Die Herstellung dieser Mittel erfolgt im allgemeinen durch trockenes Vermischen der einzelnen pulverförmigen Bestandteile unter Bildung des gewünschten Produktes. Dabei hat sich ergeben, daß bei der Lagerung der Mittel in größeren Gebinden, die etwa 20 kg — insbesondere aber 50 kg und mehr — enthalten, nach mehr oder minder langer Lagerung unter ungünstigen Lagerungsbedingungen, beispielsweise bei erhöhter Temperatur und/oder Zutritt von Feuchtigkeit, es zu Selbstzersetzungen des Chlorträgers sowie zu Reaktionen mit anderen Bestandteilen im Mittel kommt. Derartige Selbstzersetzungen sind um so unangenehmer, als sie noch mehrere Wochen nach der Herstellung auftreten können.

Es ist daher auch bereits versucht worden, durch geeignete Zusätze, wie Natriumacetat oder Erdalkalisulfate, diese Mängel zu beheben. Hierdurch enthalten jedoch die Mittel unerwünschte Ballaststoffe.

Umfangreiche Untersuchungen haben jedoch nunmehr zu dem überraschenden Ergebnis geführt, daß man auch ohne Zusatz von Fremd- und Ballaststoffen zu lagerstabilen Produkten gelangen kann, wenn man sich der nachstehend beschriebenen Mittel bedient. Diese Mittel sind dadurch gekennzeichnet, daß sie 5 bis 15 Gewichtsprozent Dichlorisocyanurat und mindestens 10, vorzugsweise über 20, Gewichtsprozent Natriumhydroxid, bezogen auf die Gesamtzusammensetzung des Mittels, enthalten, wobei letzteres in nahezu kugelförmiger Prill-Form vorliegt und diese Prills einen Durchmesser von durchschnittlich etwa 2 mm, jedoch nicht kleiner als 1 mm, und zu mindestens 80% von 2 mm aufweisen.

Unter "Prills" sind hierbei — die in der Literatur vielfach beschriebenen — Granulat-Teilchen zu verstehen, die durch Sprühtrocknung beziehungsweise Sprühkristallisation beispielsweise einer NaOH-Schmelze erhalten werden. Die erfindungsgemäßen Mittel enthalten vorzugsweise nahezu kugelförmige NaOH-Prills, die zu 100% einen Durchmesser von 2 mm aufweisen. Bedingt durch das großtechnische Herstellungsverfahren derartiger Prills weicht der tatsächliche Durchmesser mehr oder weniger von diesem Idealwert ab, so daß auch Prills mit einem etwas größeren oder geringeren Durchmesser in den Rahmen der Erfindung fallen. Keinesfalls soll jedoch erfindungsgemäß der Durchmesser der NaOH-Prills weniger als 1 mm betragen.

Dementsprechend sind im Sinne der Erfindung solche Prills verwendbar, die zu mindestens 80% einen Durchmesser von 2 mm aufweisen. Eine beispielhafte Korngrößenverteilung solcher fast kugelförmiger Prills von Natriumhydroxid ist nachstehend angegeben:

| 2,0 | 1,6 | 1,25 | 1,0 | mm |
|-----|-----|------|-----|-----|
| 86  | 11  | 3    | —   | %  |

Die Korn- oder Teilchengrößenverteilung der Prills läßt sich in einfacher Weise durch bekannte Meßmethoden, beispielsweise Siebanalyse, bestimmen.

Demgegenüber zeigen die als Grobkorn bezeichneten Granulate, die durch einfaches Mahlen von NaOH-Schuppen erhalten werden, im wesentlichen folgende Korngrößenverteilung:

| 3,15 | 2,0  | 1,6  | 1,25 | 1,0 | 0,5  | 0,25 | mm |
|------|------|------|------|-----|------|------|-----|
| 2,2  | 30,2 | 17,6 | 18,2 | 11  | 16,3 | 3,7  | %  |

Die Verwendung von derartigem Grobkorn führt im Sinne der Erfindung nicht zu brauchbaren Ergebnissen.

Es hat sich weiterhin gezeigt, daß Prills mit fast kugelförmiger Oberfläche nicht geeignet sind, wenn sie eine wie nachstehend angegebene Korngrößenverteilung aufweisen:

| 1,25 | 1,0 | 0,5 | 0,25 | mm |
|------|-----|-----|------|-----|
| —    | 5   | 90  | 5    | %  |

Das Dichlorisocyanurat, vorzugsweise das Natriumsalz, wird in Form des Dihydrats, vorzugsweise jedoch in kristallwasserfreier Form verwendet. Es ist zweckmäßig, Granulate des Dichlorisocyanurats zu verwenden. Ferner ist es bevorzugt, daß die Mittel 5 bis 10 Gewichtsprozent, bezogen auf die Gesamtzusammensetzung, wasserfreies Dichlorisocyanurat enthalten.

Soweit die Mittel die obengenannten weiteren Zusätze, wie Alkalimetallsilikate, beispielsweise Natriummetasilikat, Gerüststoffe, beispielsweise Phosphate und anhydrische Phosphate, sowie Alkalimetallcarbonate, beispielsweise Soda, enthalten, finden diese jeweils in wasserfreier Form, das heißt ohne Kristallwasser, Anwendung.

2

Die Mengen an Gerüstsubstanzen betragen 5 bis 60 Gewichtsprozent, vorzugsweise 10 bis 50, Gewichtsprozent, an Alkalimetallsilikaten 5 bis 60, vorzugsweise 10 bis 40 Gewichtsprozent und an Alkalimetallcarbonaten 5 bis 50, vorzugsweise 10 bis 35, Gewichtsprozent. Gegebenenfalls können auch noch kleine Mengen in der Größenordnung von 0,5 bis 2 Gewichtsprozent nichtionische alkalibeständiger Tenside vorhanden sein. Die vorstehend angegebenen Mengen beziehen sich jeweils auf die Gesamtzusammensetzung des Mittels.

Bei den nichtionischen Tensiden handelt es sich vorzugsweise um Ethylenoxidaddukte an höhermolekulare Polypropylenglykole der Molgewichte 900 bis 4000 sowie Addukte von Ethylenoxid beziehungsweise Ethylenoxid und Propylenoxid an höhere Fettalkohole wie Dodecylalkohol, Palmitylalkohol, Stearylalkohol, Oleylalkohol oder deren Gemische, sowie synthetische, beispielsweise durch Oxosynthese hergestellte, Alkohole der Kettenlänge $C_{12}$—$C_{18}$ und entsprechende Alkylenoxidaddukte an Alkylphenole, vorzugsweise Nonylphenol. Beispiele für geeignete Anlagerungsprodukte sind das Addukt von 10 bis 30 Gewichtsprozent Ethylenoxid an ein Polypropylenglykol des Molgewichtes 1750, das Addukt von 20 Mol Ethylenoxid beziehungsweise von 9 Mol Ethylenoxid und 10 Mol Propylenoxid an Nonylphenol, das Addukt von 5 bis 12 Mol Ethylenoxid an ein Fettalkoholgemisch der Kettenlängen $C_{12}$-$C_{18}$ mit einem Anteil an etwa 30% an Oleylalkohol. Diese beispielhafte Aufzählung stellt keine Beschränkung dar.

Zur Oberprüfung der Beständigkeit der oben beschriebenen Mittel wurden in den nachstehenden Beispielen Vergleichsversuche unter folgenden Testbedingungen durchgeführt:

Bei allen Versuchen wurden als Verkaufsgebinde Polyethylen-Weithalsfässer mit 50 kg Inhalt eingesetzt, deren Deckel zur Einführung eines Widerstandstermometers durchbohrt war. Alle Versuche wurden auf einer mit Niederdruckdampf indirekt beheizten Platte durchgeführt. Die Oberflächentemperatur betrug konstant 78 bis 80°C. Die Temperatur im Prüfraum 40 bis 45°C. Die Temperaturmessungen wurden mit Widerstandsthermometern durchgeführt und die Meßwerte auf einem Mehrfarbenschreiber mit der Skalenbreite 0 bis 400°C aufgezeichnet. Die Meßstellen befanden sich 10 mm über den Böden der Polyethylengebinde.

Die vorstehend beschriebene Versuchsanordnung weist — aufgrund der hohen Temperatur — stark verschärfte Testbedingungen auf, die im Hinblick auf die normalen Lagerbedingungen als extrem und nahezu praxisfremd anzusehen sind. Diese extremen Bedingungen wurden jedoch gewählt, um die sonst erforderliche lange Lagerdauer entsprechend abzukürzen und die mit den erfindungsgemäßen Mitteln erzielbaren Vorteile klar herauszustellen. Unter diesen Bedingungen können gegebenenfalls auch erfindungsgemäße Produkte gewisse Zersetzungserscheinigungen zeigen, die jedoch gegenüber nichterfindungsgemäßen Vergleichsprodukten mit einer wesentlichen Verzögerung verlaufen.

## Beispiel 1

22 Polyethylen-Trommeln wurden mit je 50 kg eines zur Reinigung von Geschirr geeigneten Mittels gefüllt. Die Mittel enthielten

29 Gew.-% Soda

30 Gew.-% Natriumtriphosphat

12 Gew.-% Natriummetasilikat

20 Gew.-% kugelförmiger NaOH-Prills (durchschnittliche Korngröße 2 mm)

9 Gew.-% Natriumdichlorisocyanurat-dihydrat.

Keines dieser Gebinde zeigte auch nach 140 Stunden eine spontane Zersetzung.

Weiterhin wurden erfindungsgemäße Mittel der folgenden Zusammensetzungen — gleichfalls zur Reinigung von Geschirr geeignete Formulierungen — getestet:

## Beispiel 2

29,5 Gew.-% Soda

30 Gew.-% Natriumtriphosphat

12 Gew.-% Natriummetasilikat

20 Gew.-% kugelförmiger NaOH-Prills (durchschnittliche Korngröße 2 mm)

8,5 Gew.-% Natriumdichlorisocyanurat-dihydrat

Nach etwa 50 Stunden war der Aktivchlorgehalt mehrerer Gebinde von 4,76% auf 3,46 bis 2,79% abgesunken.

## Beispiel 3

30,4 Gew.-% Soda

30 Gew.-% Natriumtriphosphat

12 Gew.-% Natriummetasilikat

20 Gew.-% kugelförmiger NaOH-Prills (durchschnittliche Korngröße 2 mm)

7,6 Gew.-% Natriumdichlorisocyanurat, wasserfrei

Die vorstehende Rezeptur unterscheidet sich von Beispiel 2 im wesentlichen durch den Austausch von Dichlorisocyanurat-dihydrat gegen Natriumdichlorisocyanurat, wasserfrei: Nach etwa 50 Stunden war der Aktivchlorgehalt mehrerer Gebinde von 4,76% auf 4,71 bis 3,94% abgesunken.

In den nachfolgenden Vergleichsbeispielen wird der Einfluß von sogenanntem NaOH-Grobkorn beziehungsweise von feinkörnigeren NaOH-Prills aufgezeigt:

3

# EP 0 069 332 B2

## Vergleichsbeispiel 1

Es wurde mit der gleichen Rezeptur und unter dem Bedingungen des Beispiels 1 gearbeitet, jedoch mit Austausch der Natriumhydroxid-Prills gegen NaOH-Grobkorn. Bei 8 von 10 Gebinden kan es zur Selbstzersetzung, im Durchschnitt nach 10 bis 30 Stunden, wobei die Temperatur bei Zersetzungsbeginn circa 80°C betrug und dann auf circa 180°C anstieg. Der Natriumdichlorisocyanurat-dihydrat-Gehalt fiel von 9% auf 0,2% ab.

## Vergleichsbeispiel 2

Es wurde wie in Beispiel 1 verfahren. Der Natriumhydroxidanteil von 20 Gew.-% bestand jedoch aus feinkörnigeren NaOH-Prills, die zu 95% eine Korngröße von weniger als 1 mm aufwiesen. Bei einer Lagerung wie vorstehend beschrieben kam es zu spontaner Zersetzung. Der Aktivchlorgehalt war schon nach 29 Stunden auf 0,4% abgefallen.

## Patentansprüche

1. Feste, stark alkalische, aktivchlorhaltige Mittel, die Natriumhydroxid sowie als aktivchlorhaltige Verbindungen Dichlorisocyanurat und ggf. an sich bekannte anorganische und organische Zusätze enthalten, dadurch gekennzeichnet, daß sie 5 bis 15 Gew.-% Dichlorisocyanurat und mindestens 10, vorzugsweise über 20 Gew.-% Natriumhydroxid, bezogen auf die Gesamtzusammensetzung des Mittels enthalten, wobei letzteres in nahezu kugelförmiger Prill-Form vorliegt und diese Prills einen Durchmesser von durchschnittlich etwa 2 mm aufweisen, ihr Durchmesser nicht kleiner als 1 mm ist, und sie zu mindestens 80% einen Durchmesser von 2 mm haben.

2. Mittel nach Anspruch 1, dadurch gekennzeichnet, daß sie Dichlorisocyanurat in wasserfreier Form enthalten.

3. Mittel nach Anspruch 1 und 2, dadurch gekennzeichnet, daß sie 5 bis 10 Gewichtsprozent, bezogen auf die Gesamtzusammensetzung des Mittels, wasserfreies Dichlorisocyanurat enthalten.

4. Mittel nach Anspruch 1 bis 3, gekennzeichnet durch einen zusätzlichen Gehalt an Gerüstsubstanzen in Mengen von 5 bis 60 Gewichtsprozent, vorzugsweise 10 bis 50 Gewichtsprozent, an Alkalimetallsilikat in Mengen von 5 bis 60 Gewichtsprozent, vorzugsweise 10 bis 40 Gewichtsprozent, sowie an Alkalimetallcarbonaten in Mengen von 5 bis 50, vorzugsweise 10 bis 35, Gewichtsprozent, jeweils in wasserfreier Form, sowie gegebenenfalls an nichtionischen alkalibeständigen Tensiden in Mengen von 0,5 bis 2 Gewichtsprozent, jeweils bezogen auf die Gesamtzusammensetzung des Mittels.

## Revendications

1. Composés solides, fortement alcalins, contenant du chlore actif, qui contiennent de l'hydroxyde de sodium, ainsi que, comme composés contenant du chlore actif, un dichlorisocyanurate et éventuellement des additifs minéraux et organiques connus, composés caractérisés en ce qu'ils contiennent de 5 à 15% en poids de dichlorisocyanurate, et au moins 10, et mieux, plus de 20% en poids d'hydroxyde de sodium, calculé sur la composition totale du composé, cet hydroxyde de sodium se présentant sous la forme de prills (granulés) approximativement sphériques, dont le diamètre moyen est de 2 mm environ et toutefois, non inférieur à 1 mm et ces granulés ont au moins un diamètre de 80% de 2 mm.

2. Composés suivant la revendication 1, caractérisés en ce qu'ils contiennent le dichlorisocyanurate sous la forme anhydre.

3. Composés suivant la revendication 1 ou 2, caractérisés en ce qu'ils contiennent 5 à 10% en poids, calculé sur la composition totale des composés, de dichlorisocyanurate anhydre.

4. Composés suivant les revendications 1 à 3, caractérisés par une teneur supplémentaire, en adjuvants dans des proportions de 5 à 60% en poids, ou mieux de 10 à 50% en poids, en silicates de métaux alcalins dans des proportions de 5 à 60% en poids, ou mieux 10 à 40%, ainsi qu'en carbonates de métaux alcalins dans des proportions de 5 à 50, ou mieux 10 à 35% en poids, toujours sous la forme anhydre, ainsi qu'éventuellement en tensio-actifs non-ioniques résistant aux agents alcalins dans des proportions de 0,5 à 2% en poids, toujours calculé sur la composition totale du composé.

## Claims

1. Solid, strongly alkaline preparations containing active chlorine which contain sodium hydroxide and, as compounds containing active chlorine, dichloroisocyanurate and, optionally, inorganic and organic additives known per se, characterized in that they contain from 5 to 15% by weight dichloroisocyanurate and at least 10, but preferably more than 20% by weight sodium hydroxide, based on the overall composition of the preparation, the sodium hydroxide being present in substantially spherical prill form and these prills having a diameter of on average approximately 2 mm, but no smaller than 1 mm, and which have to at least 80% a diameter of 2 mm.

2. Preparations as claimed in Claim 1, characterized in that they contain dichlorisocyanurate in anhydrous form.

3. Preparations as claimed in Claims 1 and 2, characterized in that they contain from 5 to 10% by weight, based on the overall composition of the preparation, of anhydrous dichloroisocyanurate.

4. Preparations as claimed in Claims 1 to 3, characterized by an additional content of builders in quantities of from 5 to 60% by weight and preferably from 10 to 50% by weight, of alkali metal silicate in quantities of from 5 to 60% by weight and preferably from 10 to 40% by weight and of alkali metal carbonates in quantities of from 5 to 50% by weight and preferably from 10 to 35% by weight, in each case in anhydrous form, and optionally of non-ionic alkali-stable surfactants in quantities of from 0.5 to 2% by weight, based in each case on the overall composition of the preparation.